# EUROPEAN PATENT SPECIFICATION

(11) **EP 1 250 845 B1**
(45) Date of publication and mention of the grant of the patent: **19.01.2005**
(21) Application number: 00969930.7
(22) Date of filing: 20.10.2000
(51) Int. Cl.: A23C 9/156, A23C 9/133, A23L 2/02, A23L 2/68, A23L 1/30, A23L 1/308, A23L 1/0524, A23C 9/154, A23C 9/13

(54) **Method for producing milk-containing acidic beverage**
Verfahren zur Herstellung saurem Getränke enthaltend Milch
Procedé de production de boisson acide contanant du lait

(30) Priority: 27.10.1999 JP 30543299; 20.06.2000 JP 2000184757
(43) Date of publication of application: 23.10.2002
(73) Proprietor: Calpis Co., Ltd., Shibuya-ku, Tokyo 150-0022 (JP)
(72) Inventor: SATO, Kazuyoshi, Calpis Co., Ltd., Sagamihara-shi, Kanagawa 229-0006 (JP); SOMOTO, Akishige, Calpis Co., Ltd., Sagamihara-shi, Kanagawa 229-0006 (JP)
(74) Representative: Hallybone, Huw George
(86) International application number: PCT/JP2000/007311
(87) International publication number: WO 2001/030170

(56) References cited:
- EP-A- 0 937 407
- EP-A- 0 958 746
- EP-A1- 0 521 707
- JP-A- 8 056 567
- JP-A- 11 262 379
- US-A- 4 971 810
- US-A- 5 710 270
- PATENT ABSTRACTS OF JAPAN vol. 018, no. 334 (C-1216), 24 June 1994 (1994-06-24) & JP 06 078668 A (FUJI OIL CO LTD;OTHERS: 01), 22 March 1994 (1994-03-22)
- PATENT ABSTRACTS OF JAPAN vol. 017, no. 247 (C-1059), 18 May 1993 (1993-05-18) & JP 05 000043 A (SNOW BRAND MILK PROD CO LTD), 8 January 1993 (1993-01-08) & PATENT ABSTRACTS OF JAPAN & JP 02 510435 B2 , 26 June 1996 (1996-06-26)
- GLAHN P E ET AL: "CASEIN-PECTIN INTERACTION IN SOUR MILK BEVERAGES" SYMPOSIUM ON FOOD INGREDIENTS EUROPE, XX, XX, 4 October 1994 (1994-10-04), pages 252-256, XP000604284

## Description

The present invention relates to a method for producing a milk-containing acidic beverage that is excellent in taste and flavor and has good storage stability, and wherein aggregation and sedimentation are substantially prevented over long time storage.

Milk-containing acidic beverages have been creating a large market in the recent soft drink industry for their refreshing taste and flavor, supported by natural- and health-conscious consumers. Due to the diversified preference of consumers, the market recently demands a wide variety of milk-containing acidic beverages such as those of low-calorie, those containing components that contribute to maintenance of one's health such as fruit juice or vegetable juice, and those having a high content of milk solids not fat.

Casein, constituting 80 to 85 % of milk proteins, is said to have a micellar structure composed of sub-micelles associated together, even in the neutral range such as in milk. Micelles are most apt to sediment around pH 4.6, but also apt to associate together around pH 3.0 to 4.2, in which pH range milk-containing acid beverages exhibit their characteristic sourness, to form suspended milk protein particles, resulting in aggregation and sedimentation.

Milk-containing acidic beverages of a low-calorie type are likely to have problems of aggregation and sedimentation of suspended milk protein particles, since the content of sugar, which functions to protect protein, is restricted. According to the Japanese Nutritional Improvement Law presently in force, only the beverages of less than 5 kcal/100 ml are allowed to be indicated as being no-calorie, and beverages of not higher than 20 kcal/100 ml are allowed to be indicated as being low-calorie. Since calories of protein and sugar are both 4 kcal per gram, the total amount of protein and sugar derived from milk plus sugar as a sweetener that may be contained in the products with the indication of no-calorie is as little as less than 1.25 g/100ml, and in the case of the products with the indication of low-calorie, as little as not more than 5 g/100 ml.

Milk-containing acidic beverages that contain fruit and/or vegetable juice, usually include various components that react with milk protein, such as polyphenols, to adversely affect the stability of suspended milk protein particles. Fruit and vegetable juices of a pulpy type that contain a considerable amount of such botanical components are thus difficult to add in the milk-containing acidic beverages, compared to those of a clear type wherein such botanical components have been removed by a defecation treatment. However, the defecation treatment often results in loss of pigments and nutritional components, so that this treatment is not suitable in particular when highly-pigmented fruits and vegetables are used, or when water-insoluble nutritional components such as β carotene are intended for use.

Aggregation and sedimentation of milk proteins have no adverse effect on health, but they deteriorate the appearance of products, often incurring complaints from the consumers. In particular, due to the recent popularization of PET containers, such aggregation and sedimentation that had not posed problems when the beverages are contained in a non-transparent containers such as cans and paper packs, have recently been brought to the attention of the consumers. Further, beverages that are usually distributed at an ordinary temperature, such as those packed in PET containers or cans, are required to have the shelf life of several months to one year. Such requirement is more stringent than that for beverages on the chilled channel distribution often packed in paper containers, which beverages are distributed at a lower temperature and sufficient to have the shelf life of only several weeks.

Recently, soybean dietary fibers have been used as a stabilizing agent for milk-containing acidic beverages, since the soybean dietary fibers afford low viscosity beverages without pasty texture. However, the soybean dietary fibers, when added in a large amount, will have adverse effect on the resulting products due to their own taste and flavor, so that they cannot be used in a large amount. In addition, when the soybean dietary fibers and milk proteins are not quantitatively balanced, with the latter contained excessively, the desired stabilizing effect of the soybean dietary fibers cannot be obtained sufficiently.

In view of the above problems, a variety of methods have been proposed for inhibiting aggregation and sedimentation of suspended milk protein particles in milk-containing acidic beverages.

There have been proposed, for example, a method for producing acidic protein food, wherein water-soluble soybean saccharides and pectin are added simultaneously (Japanese Patent No. 2834345), a method for producing an acidic milk drink, wherein a dairy product is fermented with lactic acid bacteria in the presence of water-soluble hemicellulose derived from soybeans (JP-7-59512-A), and a method for producing a dairy product, wherein a dairy product is subjected to lactic acid fermentation in the presence of a stabilizing agent such as a high methoxyl pectin (JP-6-327402-A).

Further, there has also been proposed a method for producing an acidic milk drink, including the steps of dissolving a stabilizing agent such as pectin and saccharides, mixing and dissolving a milk component therein, adjusting the pH to a predetermined acidity with an acidic substance, and adjusting the particle size distribution of 95 % of suspended milk protein particles in the final product to fall within the range of 0.1 to 6 µm to make the average particle size to be 0.5 to 1.2 µm (Japanese Patent No. 2510435). Also proposed is a method for preparing a protein-containing acidic beverage composition, wherein a mixture of a protein solution and sugar is added to an acid liquid under stirring (JP-7-16084-A). These methods, however, take advantage of the protein-protective effect of sugar upon adjusting the pH with an acidifier, so that these methods cannot be applied to preparation of a low-calorie product that is substantially free of sugars other than the sugar derived from milk.

On the other hand, it is known that addition of fruit or vegetable juice to milk-containing acidic beverages will further promote aggregation and sedimentation of the suspended particles, since milk protein is unstable under the acidic conditions, and polyphenols and the like contained in the fruit and vegetable juice tend to react with milk protein.

In order to solve these problems, various solutions have hitherto been proposed, including a method for adding fruit juice with a high pectin content (Japanese Patent No. 1238699), and a method of simultaneous addition and combined use of pectin and soybean dietary fibers (Japanese Patent No. 2834345).

Such conventional methods for stabilizing milk-containing acidic beverages, however, are not yet satisfactorily effective, when the beverages to be stabilized are low-calorie products, or contain particular components, so that further technical developments are desired.

It is therefore an object of the present invention to provide a method for producing a milk-containing acidic beverage that facilitates production of a milk-containing acidic beverage having good taste and flavor and exhibiting excellent storage stability over the shelf life, and wherein aggregation and sedimentation of suspended milk protein particles are sufficiently inhibited.

It is another object of the present invention to provide a method for producing a milk-containing acidic beverage that facilitates production of even a low-calorie milk-containing acidic beverage exhibiting excellent storage stability over the shelf life, wherein aggregation and sedimentation are effectively inhibited even though sugar, which protects suspended milk protein particles against aggregation and sedimentation, is contained only in a small amount.

It is yet another object of the present invention to provide a method for producing a milk-containing acidic beverage that enables sufficient inhibition of aggregation and sedimentation of suspended milk protein particles even when the milk-containing acidic beverage contains fruit or vegetable juice including factors that disturb stability of the suspended milk protein particles.

Through intensive studies for realizing the above objects, the present inventors have found out that control of the adding order of soybean dietary fibers and pectin during production of a milk-containing acidic beverage, affords a milk-containing acidic beverage having excellent storage stability over the shelf life, thereby completing the present invention.

According to the present invention, there is provided a method for producing a milk-containing acidic beverage comprising:
providing a starting material including at least milk, soybean dietary fibers, pectin, and an acidifier;
preparing a mixture containing said milk and said soybean dietary fibers but not containing pectin, and adding said acidifier to said mixture to prepare a primary mixture having a pH of 3.0 to 4.2;
adding said pectin to said primary mixture to obtain a secondary mixture; and
homogenizing said secondary mixture to obtain a milk-containing acidic beverage.

According to the method of the present invention, first a starting material including at least milk, soybean dietary fibers, pectin, and an acidifier is provided. As used herein, the "starting material" means a collection of all the components to be added stepwise for production of the final product.

The starting material includes milk, soybean dietary fibers, pectin, and an acidifier as essential components. In addition to these components, the starting material may optionally include additional components, as long as the desired effect of the present invention are achieved, or in order to improve the desired and other effects of the present invention. Examples and details of the starting material will be discussed later.

According to the present invention, then a mixture containing the milk and the soybean dietary fibers but not containing pectin is prepared, to which mixture the acidifier is added to prepare a primary mixture having a pH of 3.0 to 4.2, preferably 3.0 to 4.0.

The milk as one of the essential components of the starting material is usually cow's milk, but either animal or vegetable milk may be used. Examples of such milk may include animal milks such as goat's milk, sheep's milk, and horse's milk; and vegetable milks such as soybean milk. One or more of these milks may be contained in the starting material.

The form of the milk in the starting material is not particularly limited, and whole fat milk, skim milk, or casein may be used. Milks reconstituted from powdered milk or concentrated milk may also be used as well.

The content of the milk in the starting material is not particularly limited, but preferably 0.1 to 3.0 wt%, more preferably 0.3 to 1.2 wt% of the total weight of the starting material in terms of milk protein, so that the resulting milk-containing acidic beverage contains 0.1 to 3.0 wt%, preferably 0.3 to 1.2 wt% milk protein. If the content of the milk protein is less than 0.1 wt%, taste and flavor characteristic of milk may not be obtained. If the content exceeds 3.0 wt%, the viscosity of the resulting beverage will increase, the refreshing taste and flavor are deteriorated, and aggregation and sedimentation of the milk protein may not be inhibited sufficiently, thus being not preferred. When the milk protein content is set in the above range of 0.3 to 1.2 wt%, at least 90 % of suspended milk protein particles contained in the resulting milk-containing acidic beverage can readily be adjusted to have the particle sizes of less than 0.5 µm according to the present method.

The soybean dietary fibers included in the starting material as one of the essential components is composed of polysaccharides extracted and purified from bean curd refuse (okara), which is a by-product of the manufacturing process of soybean products, and contains galacturonic acid, of which carboxyl group causes the fibers to be charged negatively under acidic conditions. Preferable constituent saccharides may include galactose, arabinose, galacturonic acid, rhamnose, xylose, fucose, and glucose. It is preferred that the soybean dietary fibers contain about 20 wt% galacturonic acid. Preferred examples of soybean dietary fiber products may include "SM-910", "SM-900", and "SM-700" (all of trade names) manufactured by San-Ei Gen F.F.I., Inc.

The content of the soybean dietary fibers in the starting material is not particularly limited, but usually 0.05 to 1.0 wt%, preferably 0.1 to 0.7 wt%, of the total weight of the starting material, so that the resulting beverage contains 0.05 to 1.0 wt%, preferably 0.1 to 0.7 wt% soybean dietary fibers. If the content is less than 0.05 wt%, stabilizing effect of the soybean dietary fibers upon the milk protein may not be obtained. If the content exceeds 1.0 wt%, taste and flavor of the resulting beverage may be deteriorated by the soybean dietary fibers, and the refreshingness of the beverage may be lost.

The acidifier, which is included in the starting material as one of the essential components, and contained in the primary mixture, may be of any kind as long as it can adjust the pH of the primary mixture to 3.0 to 4.2, preferably 3.0 to 4.0. Examples of the acidifier may include organic acids generated by fermentation with microorganisms such as lactic acid bacteria, organic acids contained in fruit and/or vegetable juice, inorganic acids, and mixtures thereof.

Examples of the organic acids may include lactic acid, citric acid, malic acid, tartaric acid, gluconic acid, succinic acid, and fumaric acid. Examples of the inorganic acids may include phosphoric acid.

The content of the acidifier in the starting material may be decided suitably so that the pH of the resulting primary mixture is adjusted to 3.0 to 4.2, preferably 3.0 to 4.0.

In the present invention, if pectin is contained in the mixture prior to the pH adjustment with the acidifier to 3.0 to 4.2, preferably 3.0 to 4.0, desired suspended milk protein particles cannot be obtained.

The primary mixture may contain additional components except for pectin from the starting material, as long as the desired effects of the present invention are achieved, or in order to improve the desired and other effects of the present invention. In this case, by substantially excluding sugars other than sugars derived from milk, a low-calorie milk-containing acidic beverage of not higher than 20 cal/100 ml may be prepared. Even with such a low sugar content, the present invention effectively provides desired inhibition of aggregation and sedimentation of suspended milk protein particles.

According to the method of the present invention, subsequent to the preparation of the primary mixture, at least pectin is added to the primary mixture to prepare a secondary mixture, which is then homogenized to prepare a desired milk-containing acidic beverage. In preparation of the secondary mixture, for example, after the pectin is added, the pH of the mixture may be adjusted again with an acidifier.

The pectin, which is included in the starting material as one of the essential components, and added to the primary mixture, may be, for example, either low-methoxyl pectin or high-methoxyl pectin (including high-methoxyl pectin of Blockwise type), with the latter being more preferable.

As the high-methoxyl pectin, those having the methoxyl group content of 65 to 75 mol% are preferred.

The amount of the pectin is not particularly limited, but usually 0.05 to 1.0 wt%, preferably 0.1 to 0.7 wt% of the total weight of the starting material so that the pectin content of the resulting beverage is 0.05 to 1.0 wt%, preferably 0.1 to 0.7 wt%. If the content is less than 0.05 wt%, the stabilizing effect of the pectin upon the suspended milk protein particles may be too little. If the content exceeds 1.0 wt%, the viscosity of the resulting beverage will become too high, rendering the beverage pasty, and the refreshingness of the beverage may be lost.

The homogenization of the secondary mixture may be carried out, for example, under the pressure of about 10 MPa to about 50 MPa. The apparatus to be used for the homogenizing treatment is not particularly limited, and, for example, a homogenizer commonly used in food processing may preferably be used.

In the method of the present invention, for example, fruit juice, vegetable juice, a saccharide, a sweetener, water, a flavoring agent, a pigment, or mixtures thereof may optionally be included in the starting material, and these components may be added to the primary mixture, the secondary mixture, or the beverage after the homogenization, as long as the desired effects of the present invention are achieved, or in order to improve the desired and other effects of the present invention. These additional components may be added in portions as well.

Examples of the fruit juice may include various juices such as grape, apple, pear, peach, melon, strawberry, blueberry, citrus, and pineapple juices; extracts of these; concentrates of these; and mixtures thereof. The extracts may be those commercially available.

Examples of the vegetable juice may include various juices such as tomato, carrot, celery, lettuce, cabbage, pumpkin, Jew's marrow (Moroheiya), parsley, and perilla juices; extracts of these; concentrates of these; and mixtures thereof. The extracts may be those commercially available.

The content of the fruit and/or vegetable juice is not particularly limited, and may be selected suitably depending on preference and health-consciousness. Usually, the content of the fruit and/or vegetable juice may be 1 to 50 wt%, preferably 5 to 40 wt%, of the total weight of the starting material so that the resulting beverage contains 1 to 50 wt%, preferably 5 to 40 wt% fruit and/or vegetable juice.

When such fruit and/or vegetable juice is contained in a milk-containing acidic beverage, usually the suspended milk protein particles are likely to aggregate and sediment. According to the present method, however, such aggregation and sedimentation of the suspended milk protein particles can be effectively inhibited even when the fruit and/or vegetable juice is contained.

Examples of the saccharide mentioned above may include saccharose, glucose, fructose, galactose, lactose, maltose, various oligosaccharides, and mixtures thereof, all of which are used for general food processing.

Examples of the sweetener mentioned above may include low-calorie sweeteners such as aspartame, stevia, sucralose, glycyrrhizin, and mixtures thereof. Such low-calorie sweeteners may suitably be used for rendering the resulting beverage low calorie.

In the present invention, the content of the saccharide and/or sweetener is not particularly limited, and may be selected suitably depending on preference and calories.

According to the present invention, the starting material may include other components than those mentioned above, and such other components may be added at any stage of the present method, as long as the desired effects of the present invention are achieved, or in order to improve the desired and other effects of the present invention.

In the present method, when the resulting beverage is intended for distribution at an ordinary temperature, the beverage after the homogenizing treatment is preferably subjected to a pasteurization treatment. The pasteurization treatment may preferably be carried out by heating the beverage up to a predetermined temperature of not lower than 80 °C, and keeping the temperature for 0 to 60 minutes, as commonly carried out on acidic processed foods. Alternatively, the beverage may be distributed in a chilled state without the pasteurization treatment.

The milk-containing acidic beverage obtained by the method of the present invention usually has a pH of 3.0 to 4.2, preferably about 3.0 to about 4.0, and the particle sizes of at least 90 % of the suspended milk protein particles contained in the beverage are not larger than 1.2 µm, in particular less than 0.5 µm, as measured, for example, after the accelerated preservation test at 55 °C for 5 days. Thus the present invention can provide a beverage wherein the aggregation and sedimentation of the suspended milk protein particles are inhibited over the shelf life. The present invention can further provide a low-calorie milk-containing acidic beverage of not higher than 20 kcal/100 ml, and a milk-containing acidic beverage containing fruit and/or vegetable juice, with such aggregation and sedimentation being inhibited.

The particle sizes of the suspended milk protein particles may be measured, for example, with a publicly known particle size analyzer.

The present invention will now be explained in detail with reference to Examples, which are illustrative only and should not be construed in a limiting sense.

The soybean dietary fibers and pectin used in the following Examples and Comparative Examples were SM910 (trade name) manufactured by San-Ei Gen F.F.I., Inc. and YM-115-LJ (trade name) manufactured by Hercules Japan, Inc., respectively. The homogenizing treatment was carried out in a laboratory homogenizer (model 15MR manufactured by APV GAULIN INC. operating at 15 MPa).

### Example 1

1.6 kg of powdered skim milk was dissolved in 6.4 kg of water, and 6.0 kg of a 3 wt% aqueous solution of soybean dietary fibers and 3.3 kg of high fructose syrup were added and stirred into a homogenous mixture, followed by pH adjustment to 3.7 with 2.2 kg of a 10 wt% citric anhydride solution. After thorough stirring, 4.7 kg of a 3 wt% aqueous solution of pectin and 2.5 kg of a 1 wt% aspartame solution were added, and then the total amount of the mixture was increased to 95 kg with ion exchanged water, followed by pH adjustment to 3.8 with 0.1 kg of a 10 wt% sodium citrate solution. A yogurt flavoring agent was added, and then the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0 .54 wt% milk protein, 0.18 wt% soybean dietary fibers, and 0.14 wt% pectin, had a pH of 3.8, and was 16 kcal/100 ml.

This beverage product was left still at an ordinary temperature for two months, and then subjected to measurements of the particle size distribution of suspended particles with a particle size analyzer (Model LA-920, manufactured by HORIBA, LTD.). The results of the measurements of the maximum particle size of 50, 80, and 90 cumulative percent of the suspended particles, respectively, after the two months are shown in Table 1. Further, by visual observation, it was confirmed that the product after the two months had not been changed in appearance since immediately after the production, and that the product was in good condition without any whey off.

### Example 2

1.6 kg of powdered skim milk was dissolved in 6.4 kg of water, and 6.0 kg of a 3 wt% aqueous solution of soybean dietary fibers was added and stirred into a homogeneous mixture, followed by pH adjustment to 3.7 with 2.2 kg of a 10 wt% citric anhydride solution. After thorough stirring, 4.7 kg of a 3 wt% aqueous solution of pectin, 3.3 kg of high fructose syrup, and 2.5 kg of a 1 wt% aspartame solution were added, and then the total amount of the mixture was increased to 95 kg with ion exchanged water, followed by pH adjustment to 3.8 with 0.1 kg of a 10 wt% sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product had not been changed in appearance since immediately after the production, and that the product was in good condition without any whey off.

### Example 3

1.6 kg of powdered skim milk was dissolved in 6.4 kg of water, and 6.0 kg of a 3 wt% aqueous solution of soybean dietary fibers was added and stirred into a homogeneous mixture. The total amount of the mixture was increased to 80 kg with ion exchanged water, and the pH was adjusted to 3.7 with 2.2 kg of a 10 wt% citric anhydride solution. Then 4.7 kg of a 3 wt% aqueous solution of pectin, 3.3 kg of high fructose syrup, and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product had not been changed in appearance since immediately after the production, and that the product was in good condition without any whey off.

### Comparative Example 1

1.6 kg of powdered skim milk was dissolved in 6.4 kg of water, and 3.3 kg of high fructose syrup was added and stirred into a homogeneous mixture, followed by pH adjustment to 3.7 with 2.2 kg of a 10 wt% citric anhydride solution. After thorough stirring, 6.0 kg of a 3 wt% aqueous solution of soybean dietary fibers, 4.7 kg of a 3 wt% aqueous solution of pectin, and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water . The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 2

1.6 kg of powdered skim milk was dissolved in 6.4 kg of water, and a mixture of 3.3 kg of high fructose syrup, 6.0 kg of a 3 wt% aqueous solution of soybean dietary fibers, and 4.7 kg of a 3 wt% aqueous solution of pectin was added and stirred into a homogeneous mixture, followed by pH adjustment to 3.7 with 2.2 kg of a 10 wt% citric anhydride solution. Then, 2.5 kg of a 1 wt% aspartame solution was added and stirred thoroughly, and the total amount of the mixture was increased to 100 kg with ion exchanged water, followed by pH adjustment to 3.8 with 0.1 kg of a 10 wt% sodium citrate solution. A yogurt flavoring agent was added, and the total amount of the mixture was increased to 100 kg with ion exchanged water . The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 3

1.6 kg of powdered skim milk was dissolved in 6.4 kg of water, and 4.7 kg of a 3 wt% aqueous solution of pectin and 3.3 kg of high fructose syrup were added, and stirred into a homogeneous mixture, followed by pH adjustment to 3.7 with 2.2 kg of a 10 wt% citric anhydride solution. After thorough stirring, 6.0 kg of a 3 wt% aqueous solution of soybean dietary fibers and 2.5 kg of a 1 wt% aspartame solution were added, and the total amount of the mixture was increased to 95 kg with ion exchanged water, followed by pH adjustment to 3.8 with 0.1 kg of a 10 wt% sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

### Comparative Example 4

1.6 kg of powdered skim milk was dissolved in 6.4 kg of water, and 2.2 kg of a 10 wt% citric anhydride solution was added to adjust the pH to 3.7. After thorough stirring, 6.0 kg of a 3 wt% aqueous solution of soybean dietary fibers, 4.7 kg of a 3 wt% aqueous solution of pectin, 3.3 kg of high fructose. syrup, and 2.5 kg of a 1 wt% aspartame solution were added. The total amount of the mixture was increased to 95 kg with ion exchanged water, and 0.1 kg of a 10 wt% sodium citrate solution was added to adjust the pH to 3.8. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.54 wt% milk protein, 0.18 wt% soybean dietary fibers, and 0.14 wt% pectin, had a pH of 3.8, and was 16 kcal/100 ml.

This beverage product was subjected to the same measurements as in Example 1. The results are shown in Table 1. Further, by visual observation, it was confirmed that the product after the test had remarkable aggregation and sedimentation, and transparent whey off.

**Table 1**

| | Max. particle size of 50 cumulative % of suspended particles (µm) | Max. particle size of 80 cumulative % of suspended particles (µm) | Max. particle size of 90 cumulative % of suspended particles (µm) |
|---|---|---|---|
| Example 1 | 0.238 | 0.326 | 0.391 |
| Example 2 | 0.246 | 0.331 | 0.388 |
| Example 3 | 0.233 | 0.320 | 0.386 |
| Comp. Ex. 1 | 0.435 | 0.625 | 0.794 |
| Comp. Ex. 2 | 0.700 | 7.267 | 10.129 |
| Comp. Ex. 3 | 2.585 | 4.943 | 6.337 |
| Comp. Ex. 4 | 5.812 | 8.722 | 10.735 |

### Example 4

1.4 kg of powdered skim milk was dissolved in 5.6 kg of water, and 6.7 kg of a 3 wt% aqueous solution of soybean dietary fibers was added and stirred into a homogeneous mixture, followed by pH adjustment to 3.7 with 2.3 kg of a 10 wt% citric acid solution. After thorough stirring, 6.7 kg of a 3 wt% aqueous solution of pectin was added, and then 2.7 kg of seven-fold concentrate of apple juice, 1.5 kg of 42 ° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

The particle size distribution of the suspended particles in this beverage product was measured with a particle size analyzer (model LA-920, manufactured by HORIBA LTD.) immediately after the production and after the accelerated preservation test (at 55 °C for 5 days). The results of the measurements of the maximum particle size of 50, 80, and 90 cumulative percent of the suspended particles, respectively, are shown in Table 2. Further, by visual observation, it was confirmed that the product after the accelerated preservation test had not been changed in appearance since immediately after the production, and that the product was in good condition.

### Example 5

1.4 kg of powdered skim milk was dissolved in 5.6 kg of water, and 6.7 kg of a 3 wt% aqueous solution of soybean dietary fibers was added and stirred into a homogeneous mixture, followed by pH adjustment to 3.7 with 2.3 kg of a 10 wt% citric acid solution. Then 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. The total amount of the mixture was increased to 90 kg with ion exchanged water, and 6.7 kg of a 3 wt% aqueous solution of pectin and a yogurt flavoring agent were added, and then the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had not been changed in appearance since immediately after the production, and that the product was in good condition.

### Comparative Example 5

1.4 kg of powdered skim milk was dissolved in 5.6 kg of water, and 6.7 kg of a 3 wt% aqueous solution of soybean dietary fibers and 6.7 kg of a 3 wt% aqueous solution of pectin were added simultaneously and stirred into a homogeneous mixture, followed by pH adjustment to 3.7 with 2.3 kg of a 10 wt% citric acid solution. After thorough stirring, 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a milk-containing acidic beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had sedimentation in the lower part, compared to the product immediately after the production.

### Comparative Example 6

1.4 kg of powdered skim milk was dissolved in 5.6 kg of water, and 6.7 kg of a 3 wt% aqueous solution of pectin was added and stirred into a homogeneous mixture, followed by pH adjustment to 3.7 with 2.3 kg of a 10 wt% citric acid solution. After thorough stirring, 6.7 kg of a 3 wt% aqueous solution of soybean dietary fibers was added. Then 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. A yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had remarkable aggregation and sedimentation, and transparent whey off.

### Comparative Example 7

1.4 kg of powdered skim milk was dissolved in 5.6 kg of water, and 6.7 kg of a 3 wt% aqueous solution of soybean dietary fibers was added and stirred into a homogeneous mixture. Then 6.7 kg of a 3 wt% aqueous solution of pectin was added and stirred into a homogeneous solution, followed by pH adjustment to 3.7 with 2.3 kg of a 10 wt% citric acid solution. 2.7 kg of seven-fold concentrate of apple juice, 1.5 kg of 42° carrot juice (pulpy type), and 2 kg of a 1 wt% aspartame solution were added, followed by pH adjustment to 3.8 with 0.5 kg of a sodium citrate solution. Then a yogurt flavoring agent was added, and the total amount of the mixture was increased to 100 kg with ion exchanged water. The resulting mixture was subjected to a homogenizing treatment to thereby obtain a preparation. The preparation was pasteurized by heating up to 95 °C, packed in a 200 ml transparent glass container by hot-filling, and cooled with water to room temperature, to thereby obtain a beverage product.

The beverage product thus produced contained 0.48 wt% milk protein, 0.2 wt% soybean dietary fibers, and 0.2 wt% pectin, had a pH of 3.8, and was 19 kcal/100 ml, thus being a low-calorie milk-containing acidic beverage.

This beverage product was subjected to the same measurements as in Example 4. The results are shown in Table 2. Further, by visual observation, it was confirmed that the product after the accelerated preservation test had remarkable aggregation and sedimentation, and transparent whey off.

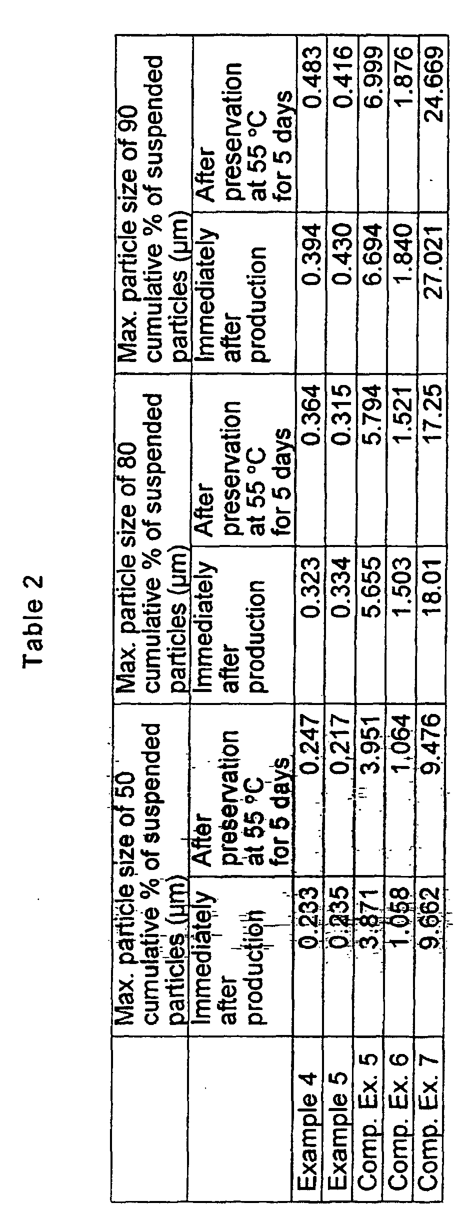

## Claims

1. A method for producing a milk-containing acidic beverage comprising:
providing a starting material including at least milk, soybean dietary fibers, pectin, and an acidifier;
preparing a mixture containing said milk and said soybean dietary fibers but not containing pectin, and adding said acidifier to said mixture to prepare a primary mixture having a pH of 3.0 to 4.2;
adding said pectin to said primary mixture to obtain a secondary mixture; and
homogenizing said secondary mixture to obtain a milk-containing acidic beverage.

2. The method of claim 1, wherein said primary mixture is substantially free of sugars other than sugars derived from milk.

3. The method of claim 1, wherein said starting material contains fruit juice and/or vegetable juice, and said fruit juice and/or vegetable juice is contained in said primary mixture.

4. The method of claim 1, wherein said starting material contains fruit juice and/or vegetable juice, and said fruit juice and/or vegetable juice is added to said secondary mixture before said homogenizing.

5. The method of claim 1, wherein a content of said milk in terms of milk protein in said starting material is 0.1 to 3.0 wt% of a total weight of said starting material.

6. The method of claim 1, wherein said homogenizing is carried out so that particle sizes of at least 90 % of suspended particles contained in the resulting milk-containing acidic beverage are not larger than 1.2 µm.

7. The method of claim 1, wherein the composition of said starting material is adjusted so that the resulting milk-containing acidic beverage is not higher than 20 kcal/100 ml.

8. The method of claim 7, wherein said homogenizing is carried out so that particle sizes of at least 90 % of suspended particles contained in the resulting milk-containing acidic beverage are less than 0.5 µm.

9. The method of claim 1, wherein a content of said soybean dietary fibers in said starting material is 0.05 to 1.0 wt%, and a content of said pectin in said starting material is 0.05 to 1.0 wt%, both of a total weight of said starting material.

## Patentansprüche

1. Verfahren zur Herstellung eines Milch-enthaltenden sauren Getränks, umfassend:
Bereitstellen eines Ausgangsmaterials, welches mindestens Milch, Ballaststoffe aus Sojabohnen, Pektin und ein Säuerungsmittel enthält;
Herstellen eines Gemischs, welches die Milch und die Ballaststoffe aus Sojabohnen enthält, welches jedoch nicht Pektin enthält, und Zufügen des Säuerungsmittels zu dem Gemisch, um ein erstes Gemisch mit einem pH-Wert von 3,0 bis 4,2 herzustellen;
Hinzufügen des Pektins zum ersten Gemisch, um ein zweites Gemisch zu erhalten; und
Homogenisieren des zweiten Gemischs, um ein Milch-enthaltendes, saures Getränk zu erhalten.

2. Verfahren nach Anspruch 1, wobei das erste Gemisch im wesentlichen frei von Zuckern ist, die von von Milch abgeleiteten Zuckern verschieden sind.

3. Verfahren nach Anspruch 1, wobei das Ausgangsmaterial Fruchtsaft und/oder Gemüsesaft enthält und der Fruchtsaft und/oder Gemüsesaft in dem ersten Gemisch enthalten ist.

4. Verfahren nach Anspruch 1, wobei das Ausgangsmaterial Fruchtsaft und/oder Gemüsesaft enthält und der Fruchtsaft und/oder Gemüsesaft dem zweiten Gemisch vor dem Homogenisieren zugefügt wird.

5. Verfahren nach Anspruch 1, wobei der Anteil der Milch, bezogen auf Milchprotein, im Ausgangsmaterial 0,1 bis 3,0 Gew.-% eines Gesamtgewichts des Ausgangsmaterials beträgt.

6. Verfahren nach Anspruch 1, wobei das Homogenisieren so durchgeführt wird, dass die Teilchengrößen von mindestens 90% der suspendierten Teilchen, die in dem erhaltenen Milch-enthaltenden, sauren Getränk enthalten sind, nicht größer als 1,2 µm sind.

7. Verfahren nach Anspruch 1, wobei die Zusammensetzung des Ausgangsmaterials so eingestellt wird, dass das erhaltene Milch-enthaltende, saure Getränk nicht mehr als 20 kcal/100 ml aufweist.

8. Verfahren nach Anspruch 7, wobei das Homogenisieren so durchgeführt wird, dass die Teilchengrößen von mindestens 90% der suspendierten Teilchen, die in dem erhaltenen Milch-enthaltenden, sauren Getränk enthalten sind, kleiner als 0,5 µm sind.

9. Verfahren nach Anspruch 1, wobei ein Gehalt an Ballaststoffen aus Sojabohnen in dem Ausgangsmaterial 0,05 bis 1,0 Gew.-% beträgt und ein Gehalt an Pektin in dem Ausgangsmaterial 0,05 bis 1,0 Gew.-%, jeweils eines Gesamtgewichts des Ausgangsmaterials, beträgt.

## Revendications

1. Procédé pour la production d'une boisson acide contenant du lait consistant :
à fournir une matière première comprenant au moins du lait, des fibres diététiques de soja, de la pectine et un acidifiant ;
à préparer un mélange contenant ledit lait et lesdites fibres diététiques de soja mais ne contenant pas de pectine, et à ajouter ledit acidifiant audit mélange pour préparer un premier mélange ayant un pH de 3,0 à 4,2 ;
à ajouter ladite pectine audit premier mélange pour obtenir un second mélange ; et
à homogénéiser ledit second mélange pour obtenir une boisson acide contenant du lait.

2. Procédé selon la revendication 1, dans lequel ledit premier mélange est pratiquement exempt de sucres autres que les sucres dérivés du lait.

3. Procédé selon la revendication 1, dans lequel ladite matière première contient du jus de fruit et/ou du jus de légume, et ledit jus de fruit et/ou de légume est contenu dans ledit premier mélange.

4. Procédé selon la revendication 1, dans lequel ladite matière première contient du jus de fruit et/ou du jus de légume, et ledit jus de fruit et/ou jus de légume est ajouté audit second mélange avant ladite homogénéisation.

5. Procédé selon la revendication 1, dans lequel une teneur dudit lait en termes de protéine de lait dans ladite matière première est de 0,1 à 3,0 % en poids d'un poids total de ladite matière première.

6. Procédé selon la revendication 1, dans lequel ladite homogénéisation est réalisée de telle sorte que les tailles de particules d'au moins 90 % des particules en suspension contenues dans la boisson acide contenant du lait résultante ne sont pas supérieures à 1,2 µm.

7. Procédé selon la revendication 1, dans lequel la composition de ladite matière première est ajustée de telle sorte que la boisson acide contenant du lait résultante n'est pas supérieure à 20 kcal/100 ml.

8. Procédé selon la revendication 7, dans lequel ladite homogénéisation est réalisée de telle sorte que les tailles de particules d'au moins 90 % des particules en suspension contenues dans la boisson acide contenant du lait résultante sont inférieures à 0,5 µm.

9. Procédé selon la revendication 1, dans lequel une teneur desdites fibres diététiques de soja dans ladite matière première est de 0,05 à 1,0 % en poids, et une teneur de ladite pectine dans ladite matière première est de 0,05 à 1,0 % en poids, tous deux par rapport à un poids total de ladite matière première.
